# EUROPÄISCHE PATENTANMELDUNG

(11) **EP 1 231 399 A2**
(43) Veröffentlichungstag der Anmeldung: **14.08.2002**
(21) Anmeldenummer: 01130015.9
(22) Anmeldetag: 18.12.2001
(51) Int. Cl.: F16D 65/092

(54) **Belagvorrichtung für eine Scheibenbremse**

(30) Priorität: 10.02.2001 DE 10106175
(71) Anmelder: Dr.Ing. h.c.F. Porsche Aktiengesellschaft, 70435 Stuttgart (DE)
(72) Erfinder: Munzert, Andreas, 71706 Markgröningen (DE)

(57) **Zusammenfassung**

Diese Belagvorrichtungen (7,8) sind für eine Scheibenbremse (1) mit einer Bremsscheibe vorgesehen, wobei die Scheibenbremse sich zum Einbau in ein Kraftfahrzeug eignet. Die Bremsscheibe (3) umfasst konkave Bremsscheibenflächen (20,21), die mit konvexen Belagflächen (22,23) der Belagvorrichtungen zusammenarbeiten. Jede Belagvorrichtung weist einen Belagkörper mit einer konvexen Belagfläche und einen nach Art einer Platte ausgeführten Belagträger (15) auf, der eine Tragfläche (17) für den Belagkörper und eine Rückseite (24) besitzt, an welche Rückseite ein Kolben eines Sattelgehäuses (13,14) herangeführt ist, das mit Gehäusewand (25) mit relativ geringem Abstand (ASF) zur Rückseite des Belagträgers verläuft.

Um günstige Bauraumverhältnisse zu erzielen wird die den Belagkörper aufweisende Belagvorrichtung zum Einbau aus einer Vormontageposition in eine Endeinbauposition mit der konvexen Belagfläche entlang der konkaven Bremsscheibenfläche geführt, wobei die Rückseite des mit der Tragfläche versehenen Belagträgers an der Gehäusewand des den Kolben aufnehmenden Sattelgehäuses mit definiertem Abstand (ASF) vorbeibewegt wird.

## Beschreibung

Die Erfindung bezieht sich auf Belagvorrichtungen für eine Scheibenbremse mit einer Bremsscheibe, vorzugsweise für ein Kraftfahrzeug nach dem Oberbegriff des Patentanspruchs 1.

Eine bekannte Belagvorrichtung, GB 1 586 465, weist einen Belagkörper auf, der an einer Tragfläche eines Belagträgers in Lage gehalten ist. Sowohl die Tragfläche wie auch eine Belagfläche des Belagkörpers, die einer Bremsscheibenfläche einer Bremsscheibe zugekehrt ist, sind als Ebenen ausgeführt.

Die DE 198 37 166 A1 zeigt eine für den Einbau in ein Kraftfahrzeug geeignete Scheibenbremse mit einer Bremsscheibe, die mit beabstandeten konkaven Bremsscheibenflächen versehen ist. Mit den konkaven, Bremsscheibenflächen arbeiten konvexe Belagflächen von Belagkörpern zusammen, die in Verbindung mit Belagträgern Belagvorrichtungen bilden. Jeder Belagkörper ist mit einer ebenen Tragfläche des zugehörigen Belagträgers verbunden. Dank der konkaven Bremsscheibenflächen und der konvexen Belagflächen werden störende Geräusche bspw. bei Auslaufbremsungen Fußgängerüberweg, Verkehrsampeln - deutlich reduziert. Allerdings erfordern die konvexen Belagflächen in axialer Richtung der Bremsscheibe gesehen einen erhöhten Bauraum zum Einbau bzw. Austausch der Belagvorrichtungen. Außerdem reduziert die konvexe Gestalt der Bremsscheibenflächen die Verschleißdicke der Belagkörper, was die Betriebszeit oder Lebensdauer der Belagvorrichtungen beeinträchtigt.

Aufgabe der Erfindung ist es daher, an der Scheibenbremse solche Vorkehrungen zu treffen, dass für die Montage der Belagvorrichtungen übliche Bauraumverhältnisse genügen. Dabei sollte aber auch sichergestellt sein, dass trotz konvexer Belagflächen die Belagvorrichtungen ein optimierte Lebensdauer aufweisen.

Erfindungsgemäß wird diese Aufgabe durch die Merkmale des Anspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Belagvorrichtung, obwohl sie mit einer konvexen Belagfläche versehen ist, auf einfache Weise d.h. ohne besonderen Raumanspruch montiert werden kann, was durch das Entlangführen der Belagfläche an der konkaven Bremsscheibenfläche erzielt wird. Unterstützt wird dies auch noch durch die Freistellung am Sattelgehäuse. Dass die Tragfläche und die Rückseite des Belagträgers der Form der konvexen Belagfläche folgen, trägt dazu bei, dass die Verschleißdicke des Belagkörpers im Hinblick auf seine Lebensdauer bzw. Standfestigkeit optimiert ist. Schließlich ist der Belagträger ein leicht herstellbares Bauteil.

In der Zeichnung wird ein Ausführungsbeispiel der Erfindung gezeigt, das nachstehend näher beschrieben ist.

Es zeigen
- Fig. 1: eine Seitenansicht einer Scheibenbremse mit einer Bremsscheibe und einem Bremssattel mit Belagvorrichtungen, teilweise im Schnitt,
- Fig. 2: eine Einzelheit X der Fig.1 in größerem Maßstab.

Eine Scheibenbremse 1, die z.B. in ein Straßenfahrzeug, ein Schienenfahrzeug, ein Flugzeug oder dergl. eingebaut sein kann, umfasst einen Bremssattel 2 und eine Bremsscheibe 3 mit gegenüberliegenden Reibringhälften 4,5, die einen Kühlkanal 6 begrenzen.

Der Bremssattel 2 ist als sogenannter Festsattel ausgeführt, der beiderseits der Bremsscheibe schwimmend gelagerte Belagvorrichtungen 7,8 aufweist; letztere sind mittels Kolben 9,10 beaufschlagbar, die in axialer Richtung A-A der Bremsscheibe 3 wirksam sind. Die Kolben 9,10 sind axialbeweglich in Bohrungen 11,12 von Sattelgehäusen 13,14 gelagert. Jede Belagvorrichtung bspw. 7 umfasst einen Belagträger 15 und einen Belagkörper 16, die fest an einer Tragfläche 17 des Belagträgers 15 miteinander verbunden sind. Der Belagträger 15 ist mit einer Bohrung 18 versehen, die einen sich zwischen den Sattelgehäusen 13,14 erstreckenden Bolzen 19 umgibt. Auf letzterem ist die Belagvorrichtung 7 verschiebbar, und zwar in dessen axialer Richtung.

Die Bremsscheibe 3 weist auf den den Belagvorrichtungen 7,8 zugekehrten Seite, d.h. an den Reibringhälften 4,5 konkave Bremsscheibenflächen 20,21 auf, wobei die Konkavität der Bremsscheibenflächen 20,21 von einem Radius R bestimmt wird. Die Belagvorrichtungen 7,8 sind mit Belagflächen 22,23 versehen, die konvex ausgebildet, vom Radius R bezüglich ihre Form bestimmt sind und mit den Bremsscheibenflächen 20,21 zusammenarbeiten; die Konvexität wird ebenfalls durch den Radius R bestimmt.

Der Belagträger 15 ist nach Art einer Platte ausgeführt, die in radialer Richtung der Bremsscheibe 3 verläuft und neben der Tragfläche 17 eine Rückseite 24 besitzt. Die Tragfläche 17 und Rückseite 24 sind mit parallelem Abstand zueinander angeordnet, wobei die Rückseite 24 mit dem Kolben 9 des Sattelgehäuses 13 zusammenwirkt. Eine der Rückseite 24 benachbarte Gehäusewand 25 des Sattelgehäuses 13 verläuft mit relativ geringem parallelem Abstand As zur Rückseite 24.

Der Belagvorrichtung 7 wird zum Einbau aus einer Vormontageposition Vp in eine Endeinbauposition Ep mit der konvexen Belagfläche 22 entlang der konkaven Bremsscheibenfläche 20 in Kreisumfangsrichtung B geführt. Dabei wird die Rückseite 24 des Belagträgers 15 an der Gehäusewand 25 kontaktfrei vorbeibewegt. Der Ausbau der Belagvorrichtung 7 erfolgt dadurch, dass die Belagvorrichtung 7 entgegengesetzt in Kreisumfangsrichtung B geführt wird. Die Gehäusewand 25 ist in einem Endbereich 26 benachbart dem Bolzen 19, von dem aus die Belagvorrichtung 7 eingebaut wird, mit einer ausnehmungsartigen Freistellung 27 versehen, die von besagter Belagvorrichtung 7 bzw. der Rückseite 24 des Belagträgers 15 weggeführt ist. Dadurch ergibt sich zwischen der Rückseite 24 und einem benachbarten Ende 28 des Endbereichs 26 der Gehäusewand 24 bzw. der Freistellung 27 der Abstand Asf.

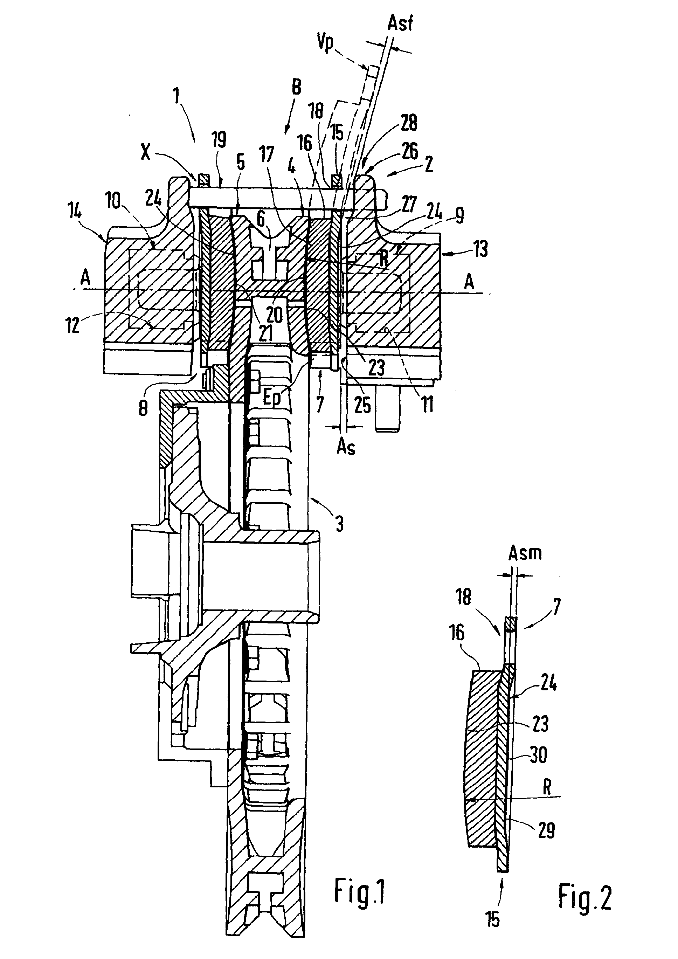

Die Tragfläche 17 und auch die Rückseite 25 des Belagträgers 15 folgen zumindest in etwa und abschnittsweise der konvexen Form der Belagfläche 23 des Belagkörpers 16 - Fig. 2 -, was zur Optimierung der Verschleißdicke von letzterem beiträgt. Hierzu ist der Belagträger 15 mit einer Durchsetzung 29 - Fig. 2 - mit dem Abstandmaß Asm versehen, wobei die Rückseite 24 zumindest im Bereich des Kolbens 9 als Ebene 30 ausgebildet sein kann.

## Patentansprüche

1. Belagvorrichtungen für eine Scheibenbremse mit einer Bremsscheibe, vorzugsweise für ein Kraftfahrzeug, welche Bremsscheibe konkave Bremsscheibenflächen umfasst, die mit konvexen Belagflächen der Belagvorrichtungen zusammenarbeiten, wobei jede Belagvorrichtung einen Belagkörper mit einer konvexen Belagfläche und einen nach Art einer Platte ausgeführten Belagträger aufweist, der eine Tragfläche für den Belagkörper und eine Rückseite besitzt, an welche Rückseite ein Kolben eines Sattelgehäuses herangeführt ist, das mit einer Gehäusewand mit relativ geringem Abstand zur Rückseite verläuft, **dadurch gekennzeichnet, dass** die den Belagkörper (16) aufweisende Belagvorrichtung (7,8) zum Einbau aus einer Vormontageposition (Vp) in eine Endeinbauposition (Ep) mit der konvexen Belagfläche (22,23) entlang der konkaven Bremsscheibenfläche (20,21) geführt wird, wobei die Rückseite (24) des mit der Tragfläche (17) versehenen Belagträgers (15) an der Gehäusewand (25) des den Kolben (9,10) aufnehmenden Sattelgehäuses (13,14 mit definiertem Abstand (Asf) vorbeibewegt wird.

2. Belagvorrichtungen nach Anspruch 1, **dadurch gekennzeichnet, dass** die Gehäusewand (25) des Sattelgehäuses (13,14) in einem Endbereich (26) von dem aus die Belagvorrichtung (7,8) eingebaut wird, eine von der Rückseite (24) der Belagvorrichtung (7,8) weggeführte Freistellung (27) aufweist.

3. Belagvorrichtungen nach Anspruch 1, **dadurch gekennzeichnet, dass** die Tragfläche (17) und vorzugsweise auch die Rückseite (24) des Belagträgers (15) zumindest abschnittsweise im Bereich des Belagkörpers (16) der Form der konvexen Belagfläche (22,23) in etwa folgen.

4. Belagvorrichtungen nach einem oder mehreren der vorangehenden Ansprüche, **dadurch gekennzeichnet, dass** zumindest die Rückseite des Belagträgers (15) im Bereich des Kolbens (9,19) als Ebene (30) ausgeführt ist.

5. Belagvorrichtungen nach einem oder mehreren der vorangehenden Ansprüche, **dadurch gekennzeichnet, dass** die Tragfläche (17) und die Rückseite (24) des Belagträgers (15) zumindest abschnittsweise mit gleichem Abstand zueinander verlaufen.
